# EUROPEAN PATENT SPECIFICATION

(11) **EP 4 024 361 B1**
(45) Date of publication and mention of the grant of the patent: **25.03.2026**
(21) Application number: 21215867.9
(22) Date of filing: 20.12.2021
(51) Int. Cl.: G06V 20/40, G06V 20/58, G08G 1/04, G08G 1/01, G06V 20/54, G08G 1/052

(54) **METHODS AND SYSTEMS FOR PREDICTING ROAD CLOSURE IN A REGION**
VERFAHREN UND SYSTEME ZUR VORHERSAGE VON STRASSENSPERRUNGEN IN EINER REGION
PROCÉDÉS ET SYSTÈMES DE PRÉDICTION DE FERMETURE DE ROUTE DANS UNE RÉGION

(30) Priority: 30.12.2020 US 202017138583
(43) Date of publication of application: 06.07.2022
(73) Proprietor: HERE Global B.V., 5611 ZT Eindhoven (NL)
(72) Inventor: Xu,, Jingwei, Chicago (US); Guan,, Yuxin, Chicago (US); Bernhardt,, Bruce, Chicago (US); Huang,, Weimin, Chicago (US)
(74) Representative: Potter Clarkson

(56) References cited:
- EP-A1- 3 648 075
- US-A1- 2019 130 742
- US-A1- 2020 105 134
- US-A1- 2020 111 349
- US-B2- 10 140 856

## Description

### TECHNOLOGICAL FIELD

The present disclosure generally relates to routing and navigation applications, and more particularly relates to systems and methods for predicting a road closure in a region for routing and navigation applications.

### BACKGROUND

Various navigation applications are available to aid, for example directions for driving, walking, or other modes of travel. Web-based and mobile app-based systems offer navigation applications that allow a user to request directions from one point to another. Often, a route traversed or to be traversed by a user encompasses several links or roads with road closures on the way. The road closure may be caused by multiple reasons like weather conditions like heavy snow or fog, construction on the roads, poor signal timings, traffic incidents and the like.

Some road closures may be caused due to traffic incidents involving vehicles on the freeway. The causes of the traffic incident could be multiple like drunk driving, over-speeding of vehicles, weather conditions, abnormal road conditions and the like. Sometimes, the traffic incident may cause dangerous queuing situations caused by one single vehicle incident at the beginning but finally resulting in serious crashes. In many cases, multiple vehicle pileups may happen following serious vehicle crashes causing disastrous static queuing situations. These static queueing situations sometimes lead to secondary crashes with the consequences of huge economic impact because of lack of timely safety warning signals for such events for the vehicles driving upstream on the same road, giving these vehicle drivers very less time to react.

Therefore, it is needed to obtain better information about these vehicle incidents and their consequential events.
US 2020/111349 A1 discloses an approach for automatically verifying a road closure report. The approach, for example, involves determining one or more features of probe data collected from a plurality of vehicles traveling on a connected set of road links of a closure link graph. The closure link graph, for instance, comprises a road link indicated by the road closure report, one or more upstream links from the road link, one or more downstream links from the road link, or a combination thereof. The approach also involves evaluating a closure probability of the road link indicated by the road closure report based on the one or more features. The road closure report is then automatically verified based on the closure probability.
EP 3648075 A1 discloses a method for providing alerts for a traffic slowdown that includes receiving location data for at least a first vehicle of a plurality of vehicles, map matching the location data for at least the first vehicle to a road network, calculating an approaching speed for at least the first vehicle at a first time, calculating a final speed for at least the first vehicle at a second time, and generating a traffic slowdown message in response to the approaching speed and the final speed. The traffic slowdown message includes at least one characteristic of the traffic slowdown. US 2020/105134 A1 discloses an approach for detecting road closures programmatically by monitoring probe activity. The approach, for example, involves generating a historical model of expected probe activity on the road segment based on historical probe data. The approach also involves monitoring observed probe activity from the road segment. The approach further involves calculating a probability of the observed probe activity based on the historical model of the expected probe activity. The approach further involves determining the closure status of the road segment based on the probability.
US 10140856 B2 discloses that a plurality of instances of probe data are received. Each instance is received from a probe apparatus of a plurality of probe apparatuses each comprising a plurality of sensors and being onboard a vehicle. An instance comprises location information indicating a location of the corresponding probe apparatus. For each of one or more instances, a distance parameter is determined based on the location information and a road segment corresponding to the location. A set of distance parameters is defined based on the distance parameter determined for each of the one or more instances. The set of distance parameters is analyzed to identify clusters of probe data. The number of clusters identified is determined and compared to a historical number of clusters. If the number of clusters identified is less than the historical number of clusters, it is determined that there is a lane closure corresponding to the road segment.
US 2019/130742 A1 discloses a safety driving assistant system that includes: an acquisition unit configured to acquire pieces of probe information from probe vehicles, each piece of probe information including information of a position of the corresponding probe vehicle and information of a time at which the probe vehicle has passed through the position; a detection unit configured to detect a sudden-deceleration-prone spot where sudden deceleration of probe vehicles frequently occurs, based on the pieces of probe information acquired by the acquisition unit; and a provision unit configured to provide information of the sudden-deceleration-prone spot detected by the detection unit, to a target vehicle that receives safety driving assistance.

### BRIEF SUMMARY

In view of the problems discussed above, it would be beneficial to obtain timely information related to vehicle incidents and their consequential events, such as road closures. A road closure caused by a serious vehicle incident pileup may cause serious loss to life and finances of users of vehicles involved on such an incident. Thus, it would be helpful to provide the traffic services to the users by delivering such road closure and traffic incident predicting messages ahead of time before, the user vehicle arrives in the region associated with the traffic incident.

Accordingly, in order to provide accurate and reliable navigation assistance, it is important to predict road closure in a region. To this end, the data utilized for providing the navigation assistance should provide accuracy in predicting road closure in the region on a route of travel of the vehicle. Especially, in the context of navigation assistance for autonomous vehicles and semi- autonomous vehicles to avoid inaccurate navigation, it is important that the assistance provided is real-time and accurate. There is a need of a system that may analyze and update lane level traffic information at a present time or for a particular period from present. Additionally, there is a need of a system that not only reports the road closure in real time, but also predicts the future road closure for next few hours or next few minutes. More importantly, in the context of autonomous vehicles, it is of utmost importance that the navigation assistance should predict the road closure and provide an alternative route to traverse to the autonomous vehicle. Accordingly, there is a need to predict road closure in the region to provide reliable navigation assistance. Example embodiments of the present disclosure provide a system, a method, and a computer program product for predicting road closure in the region.

The present invention comprises a computer-implemented method, system and computer programmable product for predicting a road closure in a region as defined by the claims. Embodiments that do not fall within the scope of the claims are to be interpreted as examples useful for understanding the invention.

Further aspects, embodiments, and features will become apparent by reference to the drawings and the following detailed description.

### BRIEF DESCRIPTION OF THE DRAWINGS

Having thus described example embodiments of the invention in general terms, reference will now be made to the accompanying drawings, which are not necessarily drawn to scale, and wherein:
FIG. 1 illustrates a schematic diagram of a network environment of a system for predicting a road closure in a region, in accordance with an example embodiment;
FIG. 2 illustrates a block diagram of a system for predicting a road closure in a region, in accordance with an example embodiment;
FIG.3A illustrates a flow chart of operations performed by the system to detect at least one dangerous slowdown (DSD) event in accordance with an example embodiment;
FIG. 3B illustrates an exemplary scenario depicting a traffic incident causing a road closure, in accordance with an example embodiment;
FIGs.4A-4C illustrate examples to show different data for predicting road closure in a region, in accordance with an example embodiment;
FIG. 5 illustrates a flow diagram of a method for verification of a road closure, in accordance with an example embodiment;
FIG. 6 illustrates a flow diagram of a method for adjusting confidence value of the predicted road closure, in accordance with an example embodiment; and
FIG. 7 illustrates a flow diagram of a method for predicting road closure in a region, in accordance with an example embodiment.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (for example, volatile or non-volatile memory device), can be differentiated from a "computer-readable transmission medium," which refers to an electromagnetic signal.

The embodiments are described herein for illustrative purposes. Therefore, it is to be understood that the present invention is not to be limited to the specific embodiments disclosed and that modifications and other embodiments are intended to be included within the scope of the appended claims.

### DEFINITIONS

The term "road closure" may be used to refer to closure of a road segment caused due one reason or the other.

The term "Dangerous slowdown" may be used to refer to slowdown or decrease in speed of vehicles on a road segment because of some dangerous situations on the road segment.

The term "link" may be used to refer to any connecting pathway including but not limited to a roadway, a highway, a freeway, an expressway, a lane, a street path, a road, an alley, a controlled access roadway, a free access roadway and the like.

The term "route" may be used to refer to a path from a source location to a destination location on any link.

The term "autonomous vehicle" may refer to any vehicle having autonomous driving capabilities at least in some conditions. An autonomous vehicle, as used throughout this disclosure, may refer to a vehicle having autonomous driving capabilities at least in some conditions. The autonomous vehicle may also be known as a driverless car, robot car, self-driving car or autonomous car. For example, the vehicle may have zero passengers or passengers that do not manually drive the vehicle, but the vehicle drives and maneuvers automatically. There can also be semi-autonomous vehicles.

### END OF DEFINITIONS

Embodiments of the present disclosure may provide a system, a method and a computer program product for predicting a road closure in a region. A vehicle travelling on a road segment may encompass issues of traffic or congestion on the road segment. The congestion may be for short period of time and for longer duration of time depending upon the reason of the congestion. Some of the reasons for traffic congestion on a road segment may be due to weather conditions, due to work zones, due to accidents and the like. Therefore, there is a need for a system that predicts road closures occuring on the road segment caused by one or more reasons in the region to improve the navigational assistance services provided to users in that region. Additionally, there is a need to provide users or autonomous vehicles with the information needed to decide when to slow down, when they need to change lanes, and when they need to consider an alternate route. These and other technical improvements of the invention will become evident from the description provided herein.

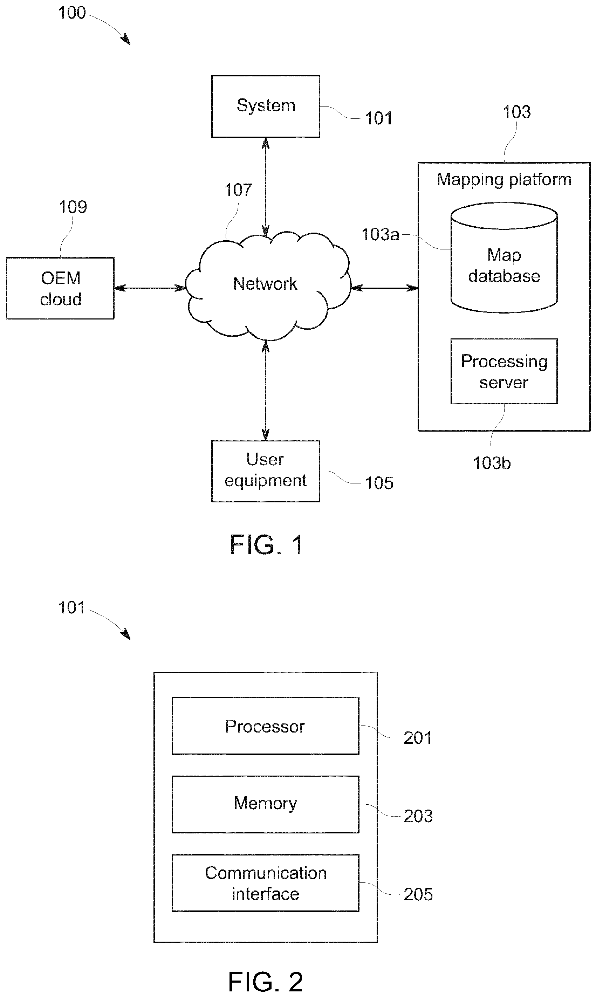

The system, the method, and the computer program product facilitating for predicting a road closure in a region are described with reference to FIG.1 to FIG. 7.

FIG. 1 illustrates a schematic diagram of a network environment 100 of a system 101 for predicting a road closure in a region, in accordance with an example embodiment. The system 101 may be communicatively coupled to a mapping platform 103, a user equipment 105 and an OEM (Original Equipment Manufacturer) cloud 109 connected via a network 107. The components described in the network environment 100 may be further broken down into more than one component such as one or more sensors or application in user equipment and/or combined in any suitable arrangement. Further, it is possible that one or more components may be rearranged, changed, added, and/or removed.

In an example embodiment, the system 101 may be embodied in one or more of several ways as per the required implementation. For example, the system 101 may be embodied as a cloud based service or a cloud based platform. As such, the system 101 may be configured to operate outside the user equipment 105. However, in some example embodiments, the system 101 may be embodied within the user equipment, for example as a part of an in-vehicle navigation system, such as an Advanced Driving Assistance System (ADAS). In each of such embodiments, the system 101 may be communicatively coupled to the components shown in FIG. 1 to carry out the desired operations and wherever required modifications may be possible within the scope of the present disclosure. In various embodiments, the system 101 may be a backend server, a remotely located server, or the like. In an embodiment, the system 101 may be a server 103b of the mapping platform 103 and therefore may be co-located with or within the mapping platform 103. The system 101 may be implemented in a vehicle, where the vehicle may be an autonomous vehicle, a semi-autonomous vehicle, or a manually driven vehicle. Further, in one embodiment, the system 101 may be a standalone unit configured to predict the road closure in the region. Alternatively, the system 101 may be coupled with an external device such as the autonomous vehicle.

The mapping platform 103 may comprise a map database 103a for storing map data and a processing server 103b. The map database 103a may store node data, road segment data, link data, point of interest (POI) data, link identification information, heading value records, or the like. Also, the map database 103a further includes speed limit data of each lane, cartographic data, routing data, and/or maneuvering data. Additionally, the map database 103a may be updated dynamically to cumulate real time traffic conditions. The real time traffic conditions may be collected by analyzing the location transmitted to the mapping platform 103 by many road users through the respective user devices of the road users. In one example, by calculating the speed of the road users along a length of road, the mapping platform 103 may generate a live traffic map, which is stored in the map database 103a in the form of real time traffic conditions. In one embodiment, the map database 103a may further store historical traffic data that includes travel times, average speeds and probe counts on each road or area at any given time of the day and any day of the year. In an embodiment, the map database 103a may store the probe data over a period for a vehicle to be at a link or road at a specific time. The probe data may be data collected by one or more devices in the vehicle such as one or more sensors, such as a hard brake sensor, a RADAR sensor, a LIDAR sensor or image capturing devices, such as a camera or mobile devices. In an embodiment, the probe data may also be captured from connected-car sensors, smartphones, personal navigation devices, fixed road sensors, smart-enabled commercial vehicles, and expert monitors observing accidents and construction. In an embodiment, a map tile area may comprise plurality of road or links in it. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network used by vehicles such as cars, trucks, buses, motorcycles, and/or other entities. Optionally, the map database 103a may contain path segment and node data records, such as shape points or other data that may represent pedestrian paths, links or areas in addition to or instead of the vehicle road record data, for example. The road/link and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 103a may also store data about the POIs and their respective locations in the POI records. The map database 103a may additionally store data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 103a may include event data (e.g., traffic incidents, construction activities, scheduled events, unscheduled events, accidents, diversions etc.) associated with the POI data records or other records of the map database 103a associated with the mapping platform 103. Optionally, the map database 103a may contain path segment and node data records or other data that may represent pedestrian paths or areas in addition to or instead of the autonomous vehicle road record data.

The map database 103a may be maintained by a content provider e.g., a map developer. By way of example, the map developer may collect geographic data to generate and enhance the map database 103a. There may be different ways used by the map developer to collect data. These ways may include obtaining data from other sources, such as municipalities or respective geographic authorities. In addition, the map developer may employ field personnel to travel by vehicle along roads throughout the geographic region to observe features and/or record information about them, for example. Also, remote sensing, such as aerial or satellite photography, may be used to generate map geometries directly or through machine learning as described herein.

In some embodiments, the map database 103a may be a master map database stored in a format that facilitates updating, maintenance and development. For example, the master map database or data in the master map database may be in an Oracle spatial format or other spatial format, such as for development or production purposes. The Oracle spatial format or development/production database may be compiled into a delivery format, such as a geographic data files (GDF) format. The data in the production and/or delivery formats may be compiled or further compiled to form geographic database products or databases, which may be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by the user equipment 105. The navigation-related functions may correspond to vehicle navigation, pedestrian navigation or other types of navigation. The compilation to produce the end user databases may be performed by a party or entity separate from the map developer. For example, a customer of the map developer, such as a navigation device developer or other end user device developer, may perform compilation on a received map database in a delivery format to produce one or more compiled navigation databases.

As mentioned above, the map database 103a may be a master geographic database, but in alternate embodiments, the map database 103a may be embodied as a client-side map database and may represent a compiled navigation database that may be used in or with end user equipment such as the user equipment 105a to provide navigation and/or map-related functions. For example, the map database 103a may be used with the user equipment 105 to provide an end user with navigation features. In such a case, the map database 103a may be downloaded or stored locally (cached) on the user equipment 105.

The processing server 103b may comprise processing means, and communication means. For example, the processing means may comprise one or more processors configured to process requests received from the user equipment 105. The processing means may fetch map data from the map database 103a and transmit the same to the user equipment 105 via OEM cloud 109 in a format suitable for use by the user equipment 105. In one or more example embodiments, the mapping platform 103 may periodically communicate with the user equipment 105 via the processing server 103b to update a local cache of the map data stored on the user equipment. Accordingly, in some example embodiments, the map data may also be stored on the user equipment 105 and may be updated based on periodic communication with the mapping platform 103.

In some example embodiments, the user equipment 105 may be any user accessible device such as a mobile phone, a smartphone, a portable computer, and the like that are portable in themselves or as a part of another portable/mobile object such as a vehicle. The user equipment 105 may comprise a processor, a memory and a communication interface. The processor, the memory and the communication interface may be communicatively coupled to each other. In some example embodiments, the user equipment 105 may be associated, coupled, or otherwise integrated with a vehicle of the user, such as an advanced driver assistance system (ADAS), a personal navigation device (PND), a portable navigation device, an infotainment system and/or other device that may be configured to provide route guidance and navigation related functions to the user. In such example embodiments, the user equipment 105 may comprise processing means such as a central processing unit (CPU), storage means such as onboard read only memory (ROM) and random access memory (RAM), acoustic sensors such as a microphone array, position sensors such as a GPS sensor, gyroscope, a LIDAR sensor, a proximity sensor, motion sensors such as accelerometer, a display enabled user interface such as a touch screen display, and other components as may be required for specific functionalities of the user equipment 105. Additional, different, or fewer components may be provided. For example, the user equipment 105 may be configured to execute and run mobile applications such as a messaging application, a browser application, a navigation application, and the like. In one embodiment, at least one user equipment such as the user equipment 105 may be directly coupled to the system 101 via the network 107. For example, the user equipment 105 may be a dedicated vehicle (or a part thereof) for gathering data for development of the map data in the database 103a. In some example embodiments, at least one user equipment such as the user equipment 105 may be coupled to the system 101 via the OEM cloud 109 and the network 107. For example, the user equipment 105 may be a consumer vehicle (or a part thereof) and may be a beneficiary of the services provided by the system 101. In some example embodiments, the user equipment 105 may serve the dual purpose of a data gatherer and a beneficiary device. The user equipment 105 may be configured to capture sensor data associated with a road which the user equipment 105 may be traversing. The sensor data may for example be image data of road objects, road signs, or the surroundings (for example buildings). The sensor data may refer to sensor data collected from a sensor unit in the user equipment 105. In accordance with an embodiment, the sensor data may refer to the data captured by the vehicle using sensors.

The network 107 may be wired, wireless, or any combination of wired and wireless communication networks, such as cellular, Wi-Fi, internet, local area networks, or the like. In one embodiment, the network 107 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (for e.g. LTE-Advanced Pro), 6G New Radio networks, ITU-IMT 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof. In an embodiment the network 107 is coupled directly or indirectly to the user equipment 105 via OEM cloud 109. In an example embodiment, the system may be integrated in the user equipment 105. In an example, the mapping platform 103 may be integrated into a single platform to provide a suite of mapping and navigation related applications for OEM devices, such as the user devices and the system 101. The system 101 may be configured to communicate with the mapping platform 103 over the network 107. Thus, the mapping platform 103 may enable provision of cloud-based services for the system 101, such as, storing the lane marking observations in the OEM cloud 109 in batches or in real-time.

FIG. 2 illustrates a block diagram of a system 101 for predicting road closure in a region, in accordance with an example embodiment. The system 101 may include a processing means such as at least one processor 201 (hereinafter, also referred to as "processor 201"), storage means such as at least one memory 203 (hereinafter, also referred to as "memory 203"), and a communication means such as at least one communication interface 205 (hereinafter, also referred to as "communication interface 205"). The processor 201 may retrieve computer program code instructions that may be stored in the memory 203 for execution of the computer program code instructions.

The processor 201 may be embodied in several different ways. For example, the processor 201 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 201 may include one or more processing cores configured to perform independently. A multi-core processor may enable multiprocessing within a single physical package. Additionally, or alternatively, the processor 201 may include one or more processors configured in tandem via the bus to enable independent execution of instructions, pipelining and/or multithreading.

In some embodiments, the processor 201 may be configured to provide Internet-of-Things (IoT) related capabilities to users of the system 101, where the users may be a traveler, a rider, a pedestrian, and the like. In some embodiments, the users may be or correspond to an autonomous or a semi-autonomous vehicle. The IoT related capabilities may in turn be used to provide smart navigation solutions by providing real time updates to the users to take pro-active decision on turn-maneuvers, lane changes, overtaking, merging and the like, big data analysis, and sensor-based data collection by using the cloud based mapping system for providing navigation recommendation services to the users. The system 101 may be accessed using the communication interface 205. The communication interface 205 may provide an interface for accessing various features and data stored in the system 101.

Additionally, or alternatively, the processor 201 may include one or more processors capable of processing large volumes of workloads and operations to provide support for big data analysis. In an example embodiment, the processor 201 may be in communication with the memory 203 via a bus for passing information among components coupled to the system 101.

The memory 203 may be non-transitory and may include, for example, one or more volatile and/or non-volatile memories. In other words, for example, the memory 203 may be an electronic storage device (for example, a computer readable storage medium) comprising gates configured to store data (for example, bits) that may be retrievable by a machine (for example, a computing device like the processor 201). The memory 203 may be configured to store information, data, content, applications, instructions, or the like, for enabling the apparatus to carry out various functions in accordance with an example embodiment of the present invention. For example, the memory 203 may be configured to buffer input data for processing by the processor 201. As exemplarily illustrated in FIG. 2, the memory 203 may be configured to store instructions for execution by the processor 201. As such, whether configured by hardware or software methods, or by a combination thereof, the processor 201 may represent an entity (for example, physically embodied in circuitry) capable of performing operations according to an embodiment of the present invention while configured accordingly. Thus, for example, when the processor 201 is embodied as an ASIC, FPGA or the like, the processor 201 may be specifically configured hardware for conducting the operations described herein. Alternatively, as another example, when the processor 201 is embodied as an executor of software instructions, the instructions may specifically configure the processor 201 to perform the algorithms and/or operations described herein when the instructions are executed. However, in some cases, the processor 201 may be a processor specific device (for example, a mobile terminal or a fixed computing device) configured to employ an embodiment of the present invention by further configuration of the processor 201 by instructions for performing the algorithms and/or operations described herein. The processor 201 may include, among other things, a clock, an arithmetic logic unit (ALU) and logic gates configured to support operation of the processor 201.

The communication interface 205 may comprise input interface and output interface for supporting communications to and from the user equipment 105 or any other component with which the system 101 may communicate. The communication interface 205 may be any means such as a device or circuitry embodied in either hardware or a combination of hardware and software that is configured to receive and/or transmit data to/from a communications device in communication with the user equipment 105. In this regard, the communication interface 205 may include, for example, an antenna (or multiple antennae) and supporting hardware and/or software for enabling communications with a wireless communication network. Additionally, or alternatively, the communication interface 205 may include the circuitry for interacting with the antenna(s) to cause transmission of signals via the antenna(s) or to handle receipt of signals received via the antenna(s). In some environments, the communication interface 205 may alternatively or additionally support wired communication. As such, for example, the communication interface 205 may include a communication modem and/or other hardware and/or software for supporting communication via cable, digital subscriber line (DSL), universal serial bus (USB) or other mechanisms.

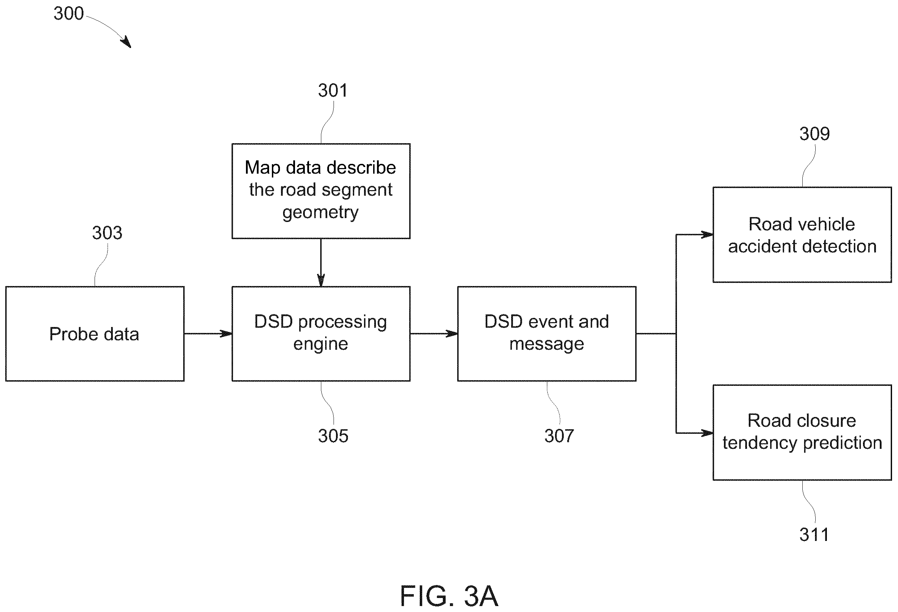

FIG.3A illustrates a flow chart 300 of operations performed by the system 101 to detect at least one dangerous slowdown (DSD) event in accordance with an example embodiment. Starting at block 301, the system 101 may be configured to obtain map attribute data for each road in a region from the map database 103a. In an example embodiment, the obtained map attributes may include map data related to all the roads in the region. In an embodiment, the region may comprise plurality of roads. In an embodiment, the map data may include but not limited to, all the speed signs, locations and value of speed signs, point of interest (POI), region of interest (ROI), historical data and environmental data associated with each road in the region. In an embodiment, the historical data may be associated with but not limited to, road closure data for the road in a particular weather condition, in particular hours of a day (for example, office hours, school timings), data about traffic congestion because of traffic incidents or accidents and the like.

At block 303, the system 101 may be configured to obtain probe data from one or more vehicles in the region. In an embodiment, the probe data consists of a location, time, direction of travel, braking time, environmental images and speed with which a vehicle is travelling on a road segment. In an embodiment, the probe data may also give information related to decrease in speed of a vehicle at a particular location along with the time. In an embodiment, the probe data may also give information that how much time a vehicle is spending or waiting on a particular road segment. If there is congestion, the vehicle may spend more than the usual time on a particular road segment and if there is no congestion, the vehicle may not take much time on a particular road segment. The system 101 may obtain the probe data collected from multiple resources such as, but not limited to, mobile devices, or one or more sensors, or cameras or GPS unit installed in the vehicle or mobile device, end user vehicles equipped with navigation devices and the like.

At block 305, the system 101 may be configured to ingest the obtained probe data and map data in a Dangerous Slowdown (DSD) processing engine. The system 101 may determine the information associated with the road or links on which the probe data was captured by the one or more vehicles and may provide traffic information associated with the road segment. The system 101 may further obtain trajectories of one or more vehicles based on the obtained probe data and the obtained map data. For example, the system 101 may obtain multiple locations for a vehicle travelling on the road, and by identifying a correlation between the multiple locations of that single vehicle, the system 101 may generate the trajectory of the vehicle. This generated trajectory may identify the path travelled by the vehicle on the road. Further, identifying correlation between multiple locations may comprise considering the multiple locations as multiple points on the road, and joining this multiple points in the best possible manner to form a path. In this way, if there are more than one vehicle travelling and reporting data on the road, for each vehicle a corresponding vehicle trajectory may be obtained. Based on the obtained vehicle trajectories (in case of multiple vehicles), the system 101 may identify the location where the DSD event happened. The identified location may be used to predict the exact location of the vehicle event. In an embodiment, the system 101 may determine the information associated with the vehicles for which the speed decreased drastically. For example, it may be observed that speed of a first vehicle decreased from 60km/hr to 2-3km/hr at 7:05 am near a first location on a first vehicle trajectory. Similarly, if the speed of two other vehicles also decreased from 70-80km/hr to 4-5km/hr at 7:06 am in vicinity of the first location and/or the first vehicle trajectory, the system 101 may identify that there is a sudden slowdown in speed of the vehicles at this first location at around 7:05 am based on the probe data and map data associated with these vehicles.

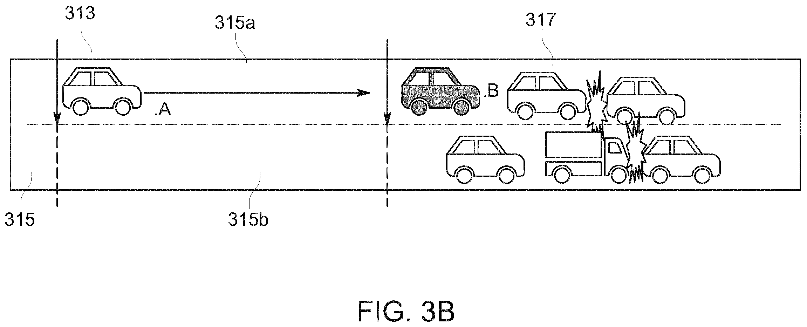

At block 307, the system 101 may output detection of Dangerous slowdown (DSD) events and messages. In an example embodiment, the DSD events may be caused by, but not limited to, one or more of a vehicle accident, or a natural calamity such as falling of a tree, emergency and the like. In an embodiment, the detection of DSD event is detected by applying an algorithm which is explained further in fig.3B.

At block 309, the system 101 may detect a vehicle event based on the information or data associated with the detected DSD events. In an embodiment, the vehicle event may be one or more of a vehicle accident, or a natural calamity such as falling of a tree and the like. In an embodiment, the road comprises of multiple lanes, and the system 101 may detect the change in speed for one or more vehicles on each of the plurality of lanes on the road. The system 101 may further determine the plurality of lanes associated with the single road. If there is a sudden slowdown in speed of one or more vehicles on all the lanes, the system 101 may conclude that all lanes are closed or blocked and therefore there is a complete road closure. At block 311, the system 101 may further predict the road closure based on the detected vehicle event. In an embodiment, if the system 101 detects any vehicle event, then the system 101 may predict the road closure on that road. The prediction of road closure is updated in the map database 103a in real time to assist users in navigation. Along with prediction of the road closure, the system 101 may further determine the duration of the road closure based on the historical data, environmental data and the real time probe data. For example, if the weather is snowy and based on historical data and probe data, the system 101 may determine that the duration of road closure may approximately be 5-6 hours. Similarly, if the weather is clear and based on based on historical data and probe data, the system 101 may determine that the duration of road closure may approximately be 1-1:30 hours.

FIG. 3B illustrates an exemplary scenario depicting a traffic incident causing a road closure. In Fig.3B, the system 101 may detect the DSD event using an algorithm as discussed in block 307. In the scenario shown in FIG. 3B, a vehicle 313 at a first location A is traveling on road 315 where a road closure is predicted, when the vehicle reached location B, because of plurality of vehicles 317. The road 315 may include two lanes, a first lane 315a, and a second lane 315b. The system 101 may obtain probe data from the vehicle 313. Similarly, the system 101 may obtain probe data from plurality of vehicles 317 on the road 315. Based on the probe data obtained for the plurality of vehicles 317 and map data obtained from map database 103a, the DSD processing engine shown at step 305 of the flowchart 300 in FIG. 3A, may run an algorithm on the obtained probe data and map data to identify a vehicle event. The algorithm is as shown below:

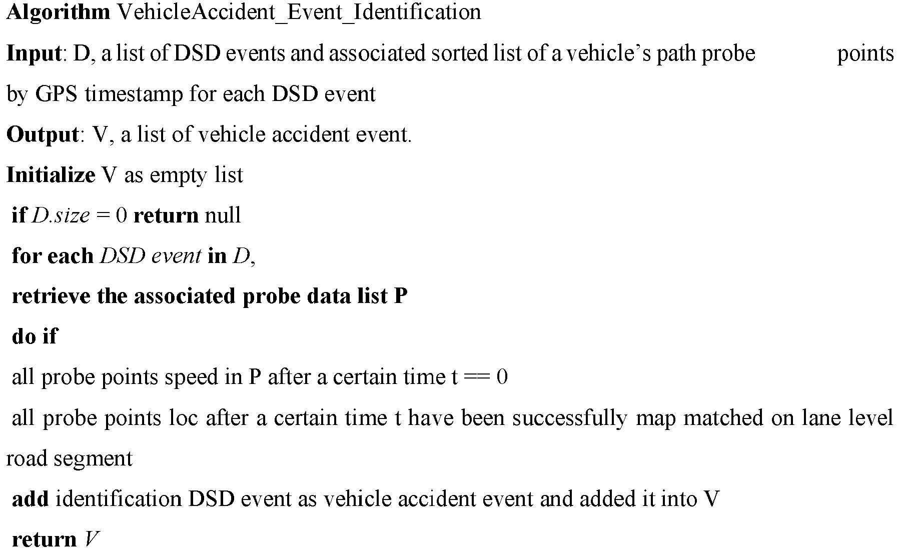

For example, for the scenario shown in FIG. 3B, the system 101 may first obtained map data about DSD events in a region, such as for the road 315. Further, the system may obtain probe data comprising data about locations A and B travelled by the vehicle 313 on the road 315. The probe data may also indicate the timestamp associated with locations A and B of the vehicle 313 to identify the time at which the vehicle 313 was at these locations. Further, the probe data may also include information about speed of the vehicle 313 when it was at location A and also the speed at location B. The system 101 may determine, from map data about DSD events, that a DSD event occurred at location B. And by correlating locations A and B by joining them by a path and further using map-matching, the system 101 may identify that the vehicle 313 travels through a trajectory which comprises lane 315a. Next, the system 101 identifies for the lane 315a, that the speed of the vehicle became 0, as it reached location B, and at a time *t*. Thus, the system 101 may identify that a vehicle event, such as a vehicle accident event, has happened at location B for lane 315a at time *t.*

The system 101 may be able to do similar analysis for each of the plurality of vehicles 317 using the algorithm given above. Based on the analysis, a list of vehicle accident events, V, may be generated along with information about where the vehicle accident events happened and at what time. If it is determined from the list V, that vehicle accidents are detected for each of the lanes 315a and 315b, of the road 315, then the system 101 may predict a road closure for the road 315 based on the list V.

In some embodiments, the vehicle accident events V, may be detected only for one of the lanes 315a or 315b, and not for both. In this case, the system 101 may identify that only the lane affected by the vehicle event, such as the vehicle accident event, is blocked, while the other lane is free/not blocked. Thus, in this case, the entire road's closure may not be predicted.

Thus, based on the algorithm discussed above, the system 101 may ingest probe data from the plurality of vehicles 317 in the DSD processing engine 305. The system 101 may identify that the speed of the plurality of vehicles 317 decreased to 0km/hr at a particular location B on the road 315. For example, the speed of the vehicle 313 decreased from 60km/hr at location A to 0km/hr at location B. The system 101 may further identify the vehicle event based on the detected change in speed of the plurality of vehicles 317. In an embodiment, the vehicle event may be, but not limited to, one or more of a vehicle accident, natural calamity or road potholes and the like.

The system 101 may further map match the probe data on each lane of the plurality of lanes on the road. In an example embodiment, the system 101 may determine the first lane 315a associated with the vehicle event. The system 101 may detect change in speed of vehicle on the first lane 315a and the second lane 315b. The system 101 may further map match the first lane 315a and 315b using the map database 103a. If both the lanes associated with the vehicle event are blocked, then the system 101 may predict that there is a closure on the road 315.

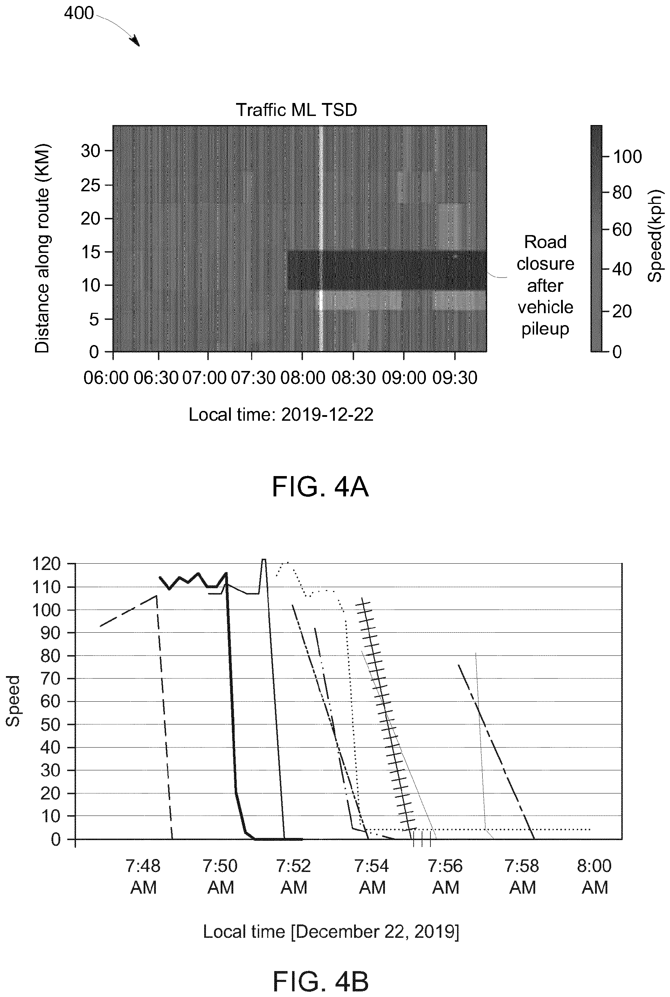

FIGs.4A-4C illustrate examples to show different data used for predicting road closure in a region, in accordance with an example embodiment. FIG..4A shows an example of a vehicle event causing a road closure. The graph shows data about distance travelled along a route by a vehicle and speed of the vehicle on the Y-axis and data about time at which the speed was observed on X-axis. The data for the graph shown in FIG. 4A was obtained for a particular day, December 22, 2019, in this exemplary illustration. The graph shows that there was a road closure on the road in time interval of 7:50 am to 10:00 am from distance of 10km to 15km on the road. The vehicle event may be because of one or the other reason such as piling up of vehicles due to accidents, piling up of vehicles due to some natural calamity or falling of trees because of bad weather or potholes in the road. The system 101 may determine the location of the vehicle event based on probe data and map data as described in FIG. 3A.

FIG.4B illustrates an example to identify vehicle events from DSD events. The graph shows data about speed of vehicles on the Y-axis and data about time at which the speed was observed on X-axis. The data for the graph shown in FIG. 4B was obtained for a particular day, December 22, 2019, in this exemplary illustration. The graph shows that the speed of the first vehicle decreased from 105km/hr to 0 km/hr at 7:49pm. Similarly, the speed of second vehicle decreased from 115km/hr - 5km/hr - 0km/hr at 7:51 am. Similarly, for other vehicles also the speed decreased to zero in time interval of next 10 minutes. Based on these DSD events, the system 101 may map match the location of vehicles based on the probe data and map data to identify the exact location of the vehicle event. In an embodiment, the vehicle event may be one or more of a piling up of vehicles due to accident, or road potholes or destruction caused on road due to natural calamity. Based on this vehicle event, the system 101 may predict the road closure.

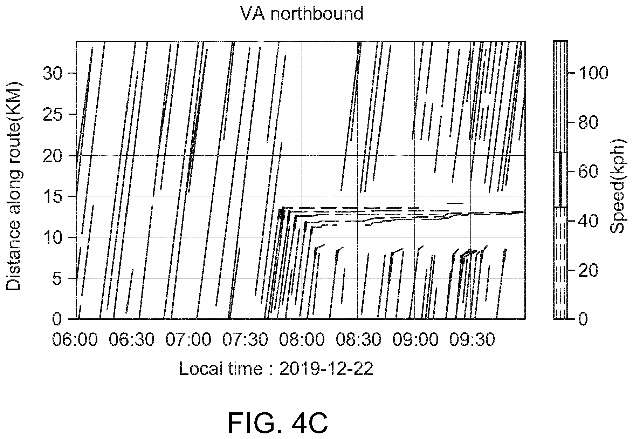

FIG. 4C shows an example of prediction of a road closure and the duration of the road closure. The graph shows data about speed of plurality of vehicles and distance travelled by plurality of vehicles on the Y-axis and data about time at which the speed was observed on X-axis. The data for the graph shown in FIG. 4C was obtained for a particular day, December 22, 2019, in this exemplary illustration. The graph shows that there is a sudden slowdown in speed of vehicles from 7:50 am. And further, the system 101 may determine the duration of the predicted road closure based on historical data, environmental data and the real time probe data. For example, the system 101 may compare the current real time probe data and environmental data with the previously stored data in the map database 103a to determine the approximate duration of the predicted road closure. Therefore, based on the determined duration the system 101 may determine that the duration of the predicted road closure may be approximately two hours (that is till 9:30).

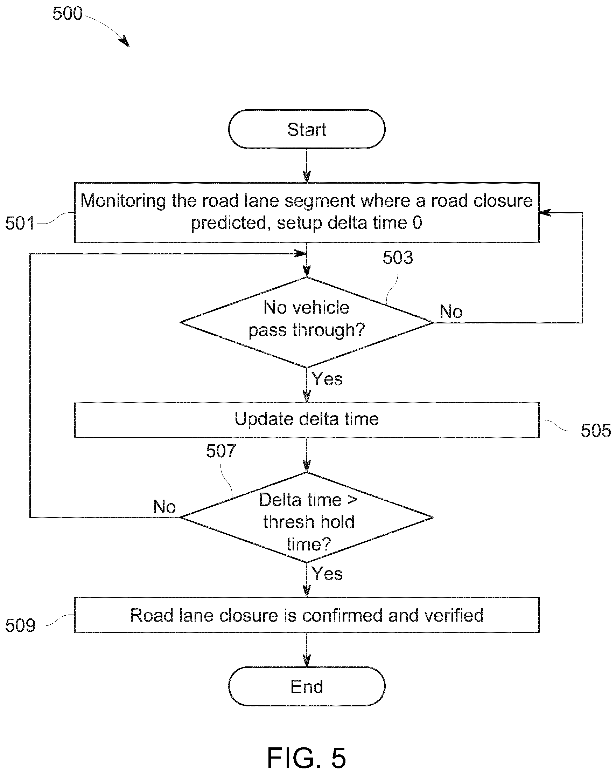

FIG. 5 illustrates a flow diagram of a method 500 for verification of a road closure, in accordance with an example embodiment. The system 101 predicts the road closure as described in FIG.3A. The system 101 may further provide the verification of the road closure using the method 500. At step 501, the system 101 may obtain vehicle movement data. In the vehicle movement data, the system 101 may obtain data by monitoring the road where the road closure was predicted with an initial value of time delta t = 0. At step 503, the method 500 includes determining if no vehicles are passing through the road where the road closure was predicted. If vehicles are not traversing through the road is detected as no, that is to say vehicles were passing through the road, while monitoring the road where the road closure is predicted, the system 101 goes back to step 501 and keeps monitoring the road. However, if vehicles are not traversing through the road is determined as a positive step, that is yes vehicle traversal is not being observed, then at step 505, , the system 101 may keep increasing and updating the time delta t for which no vehicle travelled on the road. At step 507, the system 101 may compare the value of delta t with a threshold time value. And if the value of delta t is greater than the threshold time value, then at step 509 the system 101 may confirm and verify the road closure. It may be noted that the value of the threshold time may be configurable and may be determined based on various parameters like, weather, special conditions on road like construction, and the like. And if the value of delta t is less than the threshold time value, the system 101 goes back to step 501 and keep monitoring the road where the road closure is predicted.

For example, the system 101 detected a road closure on a road segment based on initial probe data from five vehicles. And the system 101 further needs verification of the predicted road closure. For this purpose, the system 101 starts monitoring the vehicles on the road where the road closure was predicted by setting time t=0. In an embodiment, if no vehicle traversed the road for 20 mins then the system 101 may update the value of t to 20 mins. Similarly, if no vehicle traversed the road for 1 hour then the system 101 may update the value of t to 1 hour. Hence, no vehicle is traversing on the road where the road closure was predicted, the system 101 may verify that prediction of road closure is true.

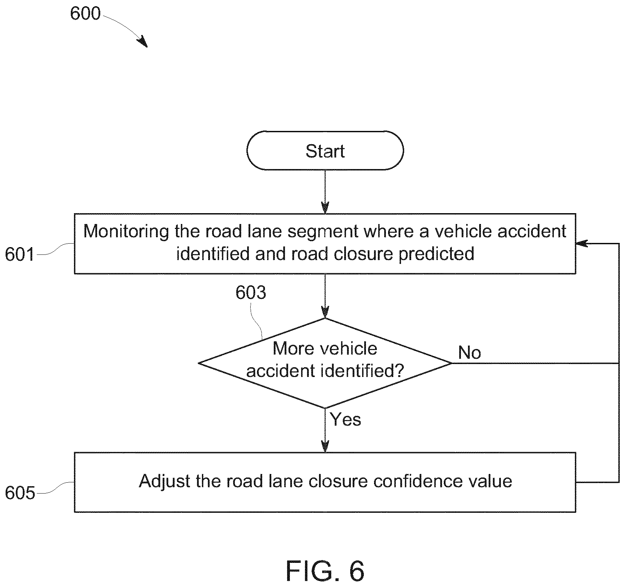

FIG. 6 illustrates a flow diagram of a method 600 for adjusting a confidence value associated with the predicted road closure, in accordance with an example embodiment. At step 601, the system 101 may start monitoring the road where the vehicle event was identified, and road closure was predicted. At step 603, the system 101 may determine if more vehicles identified the vehicle event based on the probe data or not. At step 605, if more vehicles identify the vehicle event, the system 101 may further adjust the confidence value based on the monitored data. However, if more vehicles did not identify the vehicle event at 603, then the system 101 goes back to step 601 of the method 600 and keeps monitoring the road and/or road lane and/or road segment where the road closure was predicted.

For example, the system 101 detected a road closure on a road segment based on initial probe data from five vehicles and sets a confidence value as 0.2. And the system 101 needs to adjust the confidence value based on more probe data from more vehicles. For this purpose, the system 101 starts monitoring the vehicles on the road segment where the road closure was predicted. In an embodiment, if more vehicle report same road closure then the system 101 may adjust the confidence value based on that. For example, earlier the confidence value was 0.2 based on the probe data from five vehicles and later when the system 101 obtained more probe data from more vehicles (assume 25 vehicles), the system 101 may adjust the confidence value to 0.9, showing more confidence in the prediction of the road closure on the road segment.

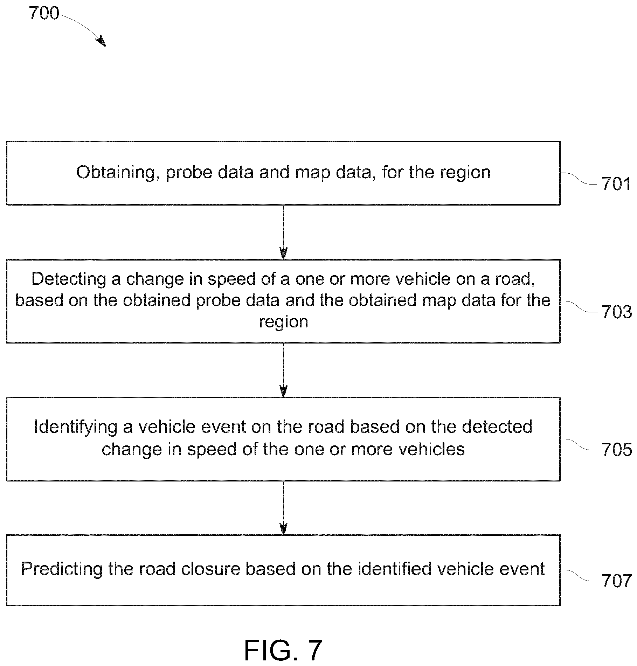

Fig. 7 illustrates a flow diagram of a method 700 for predicting road closure in a region, in accordance with an example embodiment. It will be understood that each block of the flow diagram of the method 700 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 203 of the system 101, employing an embodiment of the present invention and executed by a processor 201. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions. The method 700 illustrated by the flowchart diagram of FIG. 7 is predicting road closure in a region. Fewer, more, or different steps may be provided.

At step 701, the method 700 comprises obtaining probe data and map data for the region. The probe data is obtained by one or more probe vehicles, such as the vehicle 313 shown in FIG. 3B. The probe data may include data about the vehicle's location, timestamp, hard braking activity, vehicle speed, vehicles' environmental condition and the like. Further map data is obtained from map database 103a for each road in the region. The map data may include such as data about road attributes, road geometry, DSD events, road events and the like.

At step 703, the method 700 comprises detecting a change in speed of one or more vehicles on a road, based on the obtained probe data and the obtained map data for the region, wherein the change in speed is associated with a slowdown event associated with the one or more vehicles. For example, the vehicle 313 as illustrated in FIG. 3B reaches a speed 0 while travelling from the location A to the location B on the road 315.

At step 705, the method 700 comprises identifying a vehicle event on the road based on the detected change in speed of the one or more vehicles, wherein the vehicle event is associated with the location corresponding to the matching of trajectories of the one or more vehicles. The vehicle event is associated with one or more of a vehicle accident, or an emergency event, or a natural calamity. The algorithm discussed in association with FIG. 3B may be used to identify the list of vehicle events V, based on the probe data and the map data.

At step 707, the method 700 comprises predicting the road closure based on the identified vehicle event.3B, based on the identified vehicle event for each of the lanes 315a and 315b of the road 315. In some embodiments, the system 101 further determines the duration of the predicted road closure based on a historical data, environmental data and the obtained probe data in the region. The system 101 further updates the map database with the information associated predicted road closure. The system 101 further generates a warning notification to the user based on the predicted road closure.

The method 700 may be implemented using corresponding circuitry. For example, the method 700 may be implemented by an apparatus or system comprising a processor, a memory, and a communication interface of the kind discussed in conjunction with FIG. 2.

The method 700 may be used in conjunction with each of the methods 500 and 600 discussed in FIGs. 5 and 6 respectively by the system 101 to provide improved and more accurate road closure prediction and vehicle event identification for various navigation applications. The prediction information provided by the system 100 is accurate and timely, thus, providing safety from dangerous situations while driving, like increasing vehicle pile-up events due to accidents and other conditions. Further, the vehicle event data is continuously monitored and updated, thereby providing most up-to-date information for users travelling in the region where road closure is predicted, thereby giving the users opportunity to alter or replan their route of travel, if needed, in a timely manner.

In some example embodiments, a computer programmable product may be provided. The computer programmable product may comprise at least one non-transitory computer-readable storage medium having stored thereon computer-executable program code instructions that when executed by a computer, cause the computer to execute the method 900.

In an example embodiment, an apparatus for performing the method 700 of FIG. 7 above may comprise a processor (e.g. the processor 201) configured to perform some or each of the operations of the method of Fig. 7 described previously. The processor may, for example, be configured to perform the operations (701-707) by performing hardware implemented logical functions, executing stored instructions, or executing algorithms for performing each of the operations. Alternatively, the apparatus may comprise means for performing each of the operations described above. In this regard, according to an example embodiment, examples of means for performing operations (701- 707) may comprise, for example, the processor 201 which may be implemented in the system 101 and/or a device or circuit for executing instructions or executing an algorithm for processing information as described above.

In this way, example embodiments of the invention results in predicting road closure in a region. The prediction of road closure may forecast the traffic condition for next few hours or few minutes, so that a user can plan the routes to be followed accordingly. The invention also provides duration for road closure based on real time probe data, historical data and environmental data. The determined duration may provide information to drivers and logistics planners about where they can consistently expect to see slowdowns on the roads. Also, the invention may help government agencies and infrastructure decision-makers to determine what changes can be made on road segments that will impact the flow of traffic at micro and macro levels and take action quickly to avoid the road segment safety risks and to avoid road closures because of traffic incidents. The invention may help user to alert while driving based on the predicted road closure in a timely and targeted way in advance.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method (700) for predicting a road closure in a region, the method comprising:
obtaining (701), probe data and map data, for the region, wherein the probe data is obtained from at least one of a vehicle device, a vehicle sensor, and a fixed road sensor;
detecting (703) a change in speed of one or more vehicles (317) on a road (315), based on the obtained probe data and the obtained map data for the region, wherein the change in speed is associated with a slowdown event associated with the one or more vehicles (317);
identifying (705) a vehicle event on the road (315) based on the detected change in speed of the one or more vehicles (317), wherein the vehicle event is associated with a location corresponding to a trajectory of the one or more vehicles (317), wherein identifying the vehicle event further comprises:
determining the location associated with the vehicle event; and
determining the trajectory associated with the location based on correlation between a plurality of locations associated with the one or more vehicles (317); and
predicting (707) the road closure based on the identified vehicle event.

2. The computer-implemented method of claim 1, further comprising determining duration of the predicted road closure based on historical data, environmental data and the obtained probe data in the region.

3. The computer-implemented method of claim 1, wherein predicting the road closure further comprises:
predicting road closure for each lane (315a, 315b) on the road (315);
determining that a plurality of lanes is associated with the road (315); and
predicting closure of the road (315) based on the determination that each of the plurality of lanes is blocked.

4. The computer-implemented method of claim 1, wherein the method further comprises:
determining a confidence value associated with the predicted road closure; and
adjusting, in real time, the determined confidence value based on the obtained probe data, and the obtained map data, wherein adjusting the determined confidence value comprises:
monitoring (601) the road (315) where the vehicle event was identified, and road closure was predicted,
determining (603) if more vehicles identified the vehicle event based on the probe data or not, and
increasing (605) the confidence value if more vehicles identify the vehicle event, otherwise continuing with monitoring (601) the road (315).

5. The computer-implemented method of claim 1, wherein the method further comprises verifying the prediction of the road closure in the region based on a threshold time and movement of one or more vehicles, wherein verifying the prediction of the road closure comprises:
obtaining vehicle movement data on the road, wherein the vehicle movement data comprises data associated with monitoring (501, 503) that no vehicle movement is associated with the road;
updating (507) the threshold time based on the obtained vehicle movement data; and
verifying (509) the prediction of the road closure based on the obtained vehicle movement data and the threshold time.

6. The computer-implemented method of claim 1, wherein the vehicle event is associated with one or more of a vehicle accident event, an emergency event, and a natural calamity event.

7. The computer-implemented method of claim 1, further comprising generating a warning notification to transmit to a user based on the predicted road closure.

8. The computer-implemented method of claim 1, further comprises updating a map database with the information associated with predicted road closure.

9. The computer-implemented method of claim 1, wherein obtaining the probe data further comprises obtaining sensor data associated with at least one sensor including a hard brake sensor, a RADAR sensor, a gyroscope sensor and a camera.

10. A system (101) for predicting a road closure in a region, the system comprising:
a memory (203) configured to store computer-executable instructions; and
one or more processors (201) configured to execute the instructions to perform the method of any preceding claim.

11. A computer programmable product comprising a non-transitory computer readable medium having stored thereon computer executable instruction which when executed by one or more processors (201), cause the one or more processors (201) to perform the method of any of claims 1-9.

## Patentansprüche

1. Computerimplementiertes Verfahren (700) zum Vorhersagen einer Straßensperrung in einer Region, das Verfahren umfassend:
Erhalten (701) von Sondendaten und Kartendaten für die Region, wobei die Sondierungsdaten mindestens von einer Fahrzeugsvorrichtung, einem Fahrzeugsensor und einem festen Straßensensor erhalten werden;
Erfassen (703) einer Geschwindigkeitsänderung eines oder mehrerer Fahrzeuge (317) auf einer Straße (315), basierend auf den erhaltenen Sondendaten und den erhaltenen Kartendaten für die Region, wobei die Geschwindigkeitsänderung mit einem Verlangsamungsereignis verbunden ist, das mit dem einen oder den mehreren Fahrzeugen (317) verbunden ist;
Identifizieren (705) eines Fahrzeugereignisses auf der Straße (315) basierend auf der erfassten Geschwindigkeitsänderung des einen oder der mehreren Fahrzeuge (317), wobei das Fahrzeugereignis mit einem Ort verbunden ist, der einer Trajektorie des einen oder der mehreren Fahrzeuge (317) entspricht, wobei das Identifizieren des Fahrzeugereignisses ferner Folgendes umfasst:
Bestimmen des mit dem Fahrzeugereignis verbundenen Ortes; und
Bestimmen der mit dem Ort verbundenen Trajektorie basierend auf der Korrelation zwischen einer Vielzahl von Orten, die mit dem einen oder mehreren Fahrzeugen (317) verbunden sind; und Vorhersagen (707) der Straßensperrung basierend auf dem identifizierten Fahrzeugereignis.

2. Computerimplementiertes Verfahren nach Anspruch 1, ferner umfassend das Bestimmen der Dauer der vorhergesagten Straßensperrung basierend auf historischen Daten, Umweltdaten und den erhaltenen Sondendaten in der Region.

3. Computerimplementiertes Verfahren nach Anspruch 1, wobei das Vorhersagen der Straßensperrung ferner Folgendes umfasst:
Vorhersagen der Straßensperrung für jede Spur (315a, 315b) auf der Straße (315);
Bestimmen, dass eine Vielzahl von Spuren mit der Straße (315) verbunden ist; und
Vorhersagen der Sperrung der Straße (315) basierend auf der Bestimmung, dass jede der Vielzahl von Spuren blockiert ist.

4. Computerimplementiertes Verfahren nach Anspruch 1, wobei das Verfahren ferner Folgendes umfasst:
Bestimmen eines Konfidenzwerts, der mit der vorhergesagten Straßensperrung assoziiert ist; und
Anpassen des bestimmten Konfidenzwerts in Echtzeit, basierend auf den erhaltenen Sondendaten und den erhaltenen Kartendaten, wobei das Anpassen des bestimmten Konfidenzwerts Folgendes umfasst:
Überwachen (601) der Straße (315), auf der das Fahrzeugereignis identifiziert und eine Straßensperrung vorhergesagt wurde,
Bestimmen (603), ob weitere Fahrzeuge das Fahrzeugereignis basierend auf den Sondendaten identifiziert haben oder nicht, und
Erhöhen (605) des Konfidenzwerts, wenn mehr Fahrzeuge das Fahrzeugereignis identifizieren, ansonsten Fortsetzen des Überwachens (601) der Straße (315).

5. Computerimplementiertes Verfahren nach Anspruch 1, wobei das Verfahren ferner das Verifizieren der Vorhersage der Straßensperrung in der Region basierend auf einer Schwellenzeit und der Bewegung eines oder mehrerer Fahrzeuge umfasst, wobei das Verifizieren der Vorhersage der Straßensperrung Folgendes umfasst:
Erhalten von Fahrzeugbewegungsdaten auf der Straße, wobei die Fahrzeugbewegungsdaten Daten umfassen, die mit dem Überwachen (501, 503) verbunden sind, dass keine Fahrzeugbewegung mit der Straße verbunden ist;
Aktualisieren (507) der Schwellenzeit basierend auf den erhaltenen Fahrzeugbewegungsdaten; und Verifizieren (509) der Vorhersage der Straßensperrung basierend auf den erhaltenen Fahrzeugbewegungsdaten und der Schwellenzeit.

6. Computerimplementiertes Verfahren nach Anspruch 1, wobei das Fahrzeugereignis mit einem oder mehreren von Fahrzeugunfällen, Notfällen und Naturkatastrophen verbunden ist.

7. Computerimplementiertes Verfahren nach Anspruch 1, ferner umfassend das Erzeugen einer Warnmeldung zur Übertragung an einen Benutzer basierend auf der vorhergesagten Straßensperrung.

8. Computerimplementierte Verfahren nach Anspruch 1, ferner umfassend das Aktualisieren einer Kartendatenbank mit den Informationen, die mit der vorhergesagten Straßensperrung verbunden sind.

9. Computerimplementiertes Verfahren nach Anspruch 1, wobei das Erhalten der Sondendaten ferner das Einschließen von Sensordaten umfasst, die mit mindestens einem Sensor verbunden sind, einschließlich eines harten Bremssensors, eines RADAR-Sensors, eines Gyroskopsensors und einer Kamera.

10. System (101) zum Vorhersagen einer Straßensperrung in einer Region, das System umfassend:
einen Speicher (203), der zum Speichern von computerausführbaren Anweisungen konfiguriert ist; und
einen oder mehrere Prozessoren (201), die konfiguriert sind, um die Anweisungen auszuführen, um das Verfahren nach einem der vorstehenden Ansprüche durchzuführen.

11. Computerprogrammierbares Produkt, umfassend ein nichttransitorisches computerlesbares Medium, das darauf gespeicherte computerausführbare Anweisungen aufweist, die, wenn sie von einem oder mehreren Prozessoren (201) ausgeführt werden, den einen oder die mehreren Prozessoren (201) veranlassen, das Verfahren nach einem der Ansprüche 1 bis 9 durchzuführen.

## Revendications

1. Procédé mis en œuvre par ordinateur (700) de prédiction d'une fermeture de route dans une région, le procédé comprenant :
l'obtention (701), de données de sonde et de données cartographiques, pour la région, dans lequel les données de sonde sont obtenues à partir d'au moins l'un d'un dispositif de véhicule, d'un capteur de véhicule et d'un capteur routier fixe ;
la détection (703) d'un changement de vitesse d'un ou de plusieurs véhicules (317) sur une route (315), sur la base des données de sonde obtenues et des données cartographiques obtenues pour la région, dans lequel le changement de vitesse est associé à un événement de ralentissement associé aux un ou plusieurs véhicules (317) ;
l'identification (705) d'un événement de véhicule sur la route (315) sur la base du changement de vitesse détecté des un ou plusieurs véhicules (317), dans lequel l'événement de véhicule est associé à un emplacement correspondant à une trajectoire des un ou plusieurs véhicules (317), dans lequel l'identification de l'événement de véhicule comprend en outre :
la détermination de l'emplacement associé à l'événement de véhicule ; et
la détermination de la trajectoire associée à l'emplacement sur la base de la corrélation entre une pluralité d'emplacements associés aux un ou plusieurs véhicules (317) ; et la prédiction (707) de la fermeture de route sur la base de l'événement de véhicule identifié.

2. Procédé mis en œuvre par ordinateur selon la revendication 1, comprenant en outre la détermination de la durée de la fermeture de route prédite sur la base de données historiques, de données environnementales et des données de sonde obtenues dans la région.

3. Procédé mis en œuvre par ordinateur selon la revendication 1, dans lequel la prédiction de la fermeture de route comprend en outre :
la prédiction d'une fermeture de route pour chaque voie (315a, 315b) sur la route (315) ;
la détermination qu'une pluralité de voies est associée à la route (315) ; et
la prédiction d'une fermeture de la route (315) sur la base de la détermination que chacune de la pluralité de voies est bloquée.

4. Procédé mis en œuvre par ordinateur selon la revendication 1, dans lequel le procédé comprend en outre :
la détermination d'une valeur de confiance associée à la fermeture de route prédite ; et
le réglage, en temps réel, de la valeur de confiance déterminée sur la base des données de sonde obtenues et des données cartographiques obtenues, dans lequel le réglage de la valeur de confiance déterminée comprend :
la surveillance (601) de la route (315) où l'événement de véhicule a été identifié et la fermeture de route a été prédite,
le fait de déterminer (603) si des véhicules supplémentaires ont identifié l'événement de véhicule sur la base des données de sonde ou non, et
l'augmentation (605) de la valeur de confiance si des véhicules supplémentaires identifient l'événement de véhicule, sinon la poursuite de la surveillance (601) de la route (315).

5. Procédé mis en œuvre par ordinateur selon la revendication 1, dans lequel le procédé comprend en outre la vérification de la prédiction de la fermeture de route dans la région sur la base d'un temps seuil et du mouvement d'un ou de plusieurs véhicules, dans lequel la vérification de la prédiction de la fermeture de route comprend :
l'obtention de données de mouvement de véhicule sur la route, dans lequel les données de mouvement de véhicule comprennent des données associées à la surveillance (501, 503) indiquant qu'aucun mouvement de véhicule n'est associé à la route ;
la mise à jour (507) du temps seuil sur la base des données de mouvement de véhicule obtenues ; et la vérification (509) de la prédiction de la fermeture de route sur la base des données de mouvement de véhicule obtenues et du temps seuil.

6. Procédé mis en œuvre par ordinateur selon la revendication 1, dans lequel l'événement de véhicule est associé à l'un ou plusieurs d'un événement d'accident de véhicule, d'un événement d'urgence et d'un événement de catastrophe naturelle.

7. Procédé mis en œuvre par ordinateur selon la revendication 1, comprenant en outre la génération d'une notification d'avertissement à transmettre à un utilisateur sur la base de la fermeture de route prédite.

8. Procédé mis en œuvre par ordinateur selon la revendication 1, comprend en outre la mise à jour d'une base de données cartographiques avec les informations associées à la fermeture de route prédite.

9. Procédé mis en œuvre par ordinateur selon la revendication 1, dans lequel l'obtention des données de sonde comprend en outre l'obtention de données de capteur associées à au moins un capteur comportant un capteur de freinage brusque, un capteur RADAR, un capteur gyroscopique et une caméra.

10. Système (101) de prédiction d'une fermeture de route dans une région, le système comprenant :
une mémoire (203) configurée pour stocker des instructions exécutables par ordinateur ; et
un ou plusieurs processeurs (201) configurés pour exécuter les instructions permettant de réaliser le procédé selon une quelconque revendication précédente.

11. Produit programmable par ordinateur comprenant un support non transitoire lisible par ordinateur sur lequel sont stockées des instructions exécutables par ordinateur qui, lorsqu'elles sont exécutées par un ou plusieurs processeurs (201), amènent les un ou plusieurs processeurs (201) à réaliser le procédé selon l'une quelconque des revendications 1 à 9.
